# EUROPEAN PATENT APPLICATION

(11) **EP 4 628 780 A1**
(43) Date of publication of application: **08.10.2025**
(21) Application number: 23911694.0
(22) Date of filing: 12.12.2023
(51) Int. Cl.: F17C 13/00

(54) **LIQUEFIED HYDROGEN EQUIPMENT**

(30) Priority: 28.12.2022 JP 2022211904
(71) Applicant: KAWASAKI JUKOGYO KABUSHIKI KAISHA, Kobe-shi, Hyogo 650-8670 (JP)
(72) Inventor: MATSUDA, Yoshihiro, Kobe-shi, Hyogo 650-8670 (JP); KIKU, Hirotaka, Kobe-shi, Hyogo 650-8670 (JP); FUKUHARA, Taisuke, Kobe-shi, Hyogo 650-8670 (JP); KITADA, Kazuki, Kobe-shi, Hyogo 650-8670 (JP)
(74) Representative: Müller-Boré & Partner Patentanwälte PartG mbB
(86) International application number: PCT/JP2023/044439
(87) International publication number: WO 2024/142913

(57) **Abstract**

A liquefied hydrogen facility (1) includes: a storage tank (2) that stores liquefied hydrogen; a first transport line (4) that connects the storage tank (2) and a carrier (100) so that a boil-off gas in a gas phase portion (2a) in the storage tank (2) can be guided to the carrier (100); a compression device (12) provided on the first transport line (4) and sucks the boil-off gas from the storage tank (2) and sends out the boil-off gas to the carrier (100); and a heat exchanger (13) provided on a downstream side of the compression device (12) on the first transport line (4); and a second transport line (5) that is disposed to extend from the storage tank (2) to a consumer (110) through the heat exchanger (13) and guides, from the storage tank (2) to the heat exchanger (13), hydrogen having a temperature lower than a temperature of a boil-off gas after being compressed by the compression device (12).

## Description

### Technical Field

The present disclosure relates to a liquefied hydrogen facility that handles liquefied hydrogen.

### Background Art

A liquefied hydrogen facility is known that receives liquefied hydrogen from a carrier such as a ship and supplies the liquefied hydrogen to a consumer. For example, Patent Literature 1 below discloses a facility including a storage tank that stores liquefied hydrogen, a supply pipe connected to the storage tank, and a loading arm that has an articulated structure and connects the supply pipe and a ship. The storage tank is connected to a consumer such as a power plant via a predetermined supply line.

In the above-described liquefied hydrogen facility, when the hydrogen is supplied from the storage tank to the consumer, various types of heat input and heating are performed in the course of the hydrogen passing through the supply line connecting the storage tank and the consumer. As a result, hydrogen gas whose temperature has been sufficiently raised from the temperature range of liquefied hydrogen (around -253°C) is supplied to the consumer. At this time, if the hydrogen gas is simply heated by heat input and heating from the outside, cold energy stored in the storage tank is not effectively used, and there is room for improvement in terms of energy efficiency.

### Citation List

### Patent Literature

Patent Literature 1: JP 2017-202783 A

### Summary of Invention

The present disclosure has been made in view of the above circumstances, and an object of the present disclosure is to provide a liquefied hydrogen facility capable of effectively using cold energy in a storage tank.

In order to solve the above problem, a liquefied hydrogen facility according to one aspect of the present disclosure includes: a storage tank that stores liquefied hydrogen; a first transport line that connects the storage tank and a predetermined carrier and is configured to guide out, to the carrier, a boil-off gas in a gas phase portion in the storage tank; a compression device provided on the first transport line and configured to suck the boil-off gas from the storage tank and send out the boil-off gas to the carrier; a heat exchanger provided on a downstream side of the compression device on the first transport line; and a second transport line that is disposed to extend from the storage tank to a predetermined consumer through the heat exchanger and guides, from the storage tank to the heat exchanger, hydrogen having a temperature lower than a temperature of a boil-off gas after being compressed by the compression device.

With the liquefied hydrogen facility of the present disclosure, cold energy in the storage tank can be effectively used.

### Brief Description of Drawings

FIG. 1 is a system diagram illustrating an overall configuration of a liquefied hydrogen facility according to one embodiment of the present disclosure.
FIG. 2 is a diagram for describing an outline of a cool-down process performed before receiving liquefied hydrogen, and corresponds to FIG. 1.

### Description of Embodiments

### [Configuration of Liquefied Hydrogen Facility]

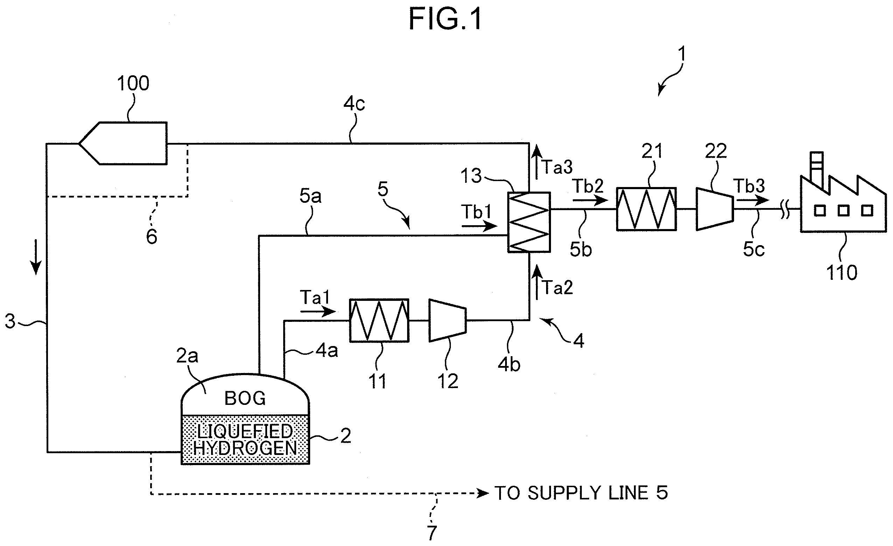

FIG. 1 is a system diagram showing an overall configuration of a liquefied hydrogen facility 1 according to one embodiment of the present disclosure. A liquefied hydrogen facility 1 illustrated in the figure is a facility for receiving liquefied hydrogen from a carrier ship 100 and supplying the liquefied hydrogen to a power plant 110. Specifically, the liquefied hydrogen facility 1 includes: a storage tank 2 that receives and stores liquefied hydrogen supplied from the carrier ship 100; an unloading line 3 extending from the carrier ship 100 to the storage tank 2; a return line 4 extending from the storage tank 2 to the carrier ship 100; a supply line 5 extending from the storage tank 2 to the power plant 110; a first branch line 6 branching from the return line 4 and connecting to the unloading line 3; and a second branch line 7 branching from the unloading line 3. The carrier ship 100 is a carrier that transports liquefied hydrogen, and is a ship that can be docked in a harbor near the storage tank 2. The power plant 110 is a consumer who consumes hydrogen, and is a plant that burns supplied hydrogen to generate electric power using the combustion energy.

The storage tank 2 is a tank that stores liquefied hydrogen while keeping the liquefied hydrogen cold. As the storage tank 2, a tank having a multiple-shell structure excellent in cold insulation performance is preferable. In this case, the storage tank 2 includes at least: an inner tank that defines a storage space for liquefied hydrogen; and an outer tank that is disposed outside the inner tank and forms a heat insulation layer between the outer tank and the inner tank. The shape of the storage tank 2 is not particularly limited and can be, for example, a flat bottom cylindrical tank with a spherical roof. Other than that, it is also possible to use a spherical storage tank.

The unloading line 3 is a pipe that connects the carrier ship 100 docked in a harbor and the storage tank 2 to each other. At the time of unloading, at which liquefied hydrogen is received from the carrier ship 100, the liquefied hydrogen sent from a storing tank of the carrier ship 100 is introduced into the storage tank 2 through the unloading line 3. In other words, the unloading line 3 is a pipe through which the liquefied hydrogen transferred from the carrier ship 100 to the storage tank 2 at the time of receiving the liquefied hydrogen flows.

While the liquefied hydrogen is stored in the storage tank 2, the liquefied hydrogen is evaporated by heat input to the liquefied hydrogen, and evaporated hydrogen is generated as a boil-off gas (BOG). Therefore, a gas phase portion 2a filled with a boil-off gas (hydrogen gas) is formed in an upper part of the storage tank 2.

The return line 4 is a pipe that connects the upper part (roof part) of the storage tank 2 and the carrier ship 100 to each other. The return line 4 is used to send back the boil-off gas to the carrier ship 100 at the time of receiving the liquefied hydrogen. That is, at the time of receiving the liquefied hydrogen, the liquefied hydrogen is delivered from the storing tank of the carrier ship 100 and is introduced into the storage tank 2. At this time, in order to maintain stable unloading, the boil-off gas in the gas phase portion 2a in the storage tank 2 is supplied to the carrier ship 100 through the return line 4 in accordance with the amount of liquefied hydrogen delivered from the storing tank of the carrier ship 100. The return line 4 corresponds to a "first transport line" in the present disclosure.

On the return line 4, a first heater 11, a first compression device 12, and a heat exchanger 13 are arranged in this order from the upstream side, which is close to the storage tank 2.

The first heater 11 heats a low-temperature boil-off gas drawn from the gas phase portion 2a in the storage tank 2. The first heater 11 can be, for example, a heat exchanger that uses air or water at room temperature as a medium for heat exchange.

The first compression device 12 sucks the boil-off gas that has passed through the first heater 11 and has been heated, and pressure-feeds the boil-off gas to the downstream side. The first compression device 12 can include, for example: a rotary element such as an impeller; and a drive source such as a motor that rotationally drives the rotary element.

The heat exchanger 13 cools again the boil-off gas pressure-fed from the first compression device 12. That is, by using, as a medium for heat exchange, the low-temperature boil-off gas flowing through the supply line 5, the heat exchanger 13 cools again the boil-off gas that has passed through the first heater 11 and the first compression device 12 and has been heated.

The return line 4 includes: an upstream pipe 4a connecting the storage tank 2 and the first heater 11; an intermediate pipe 4b connecting the first compression device 12 and the heat exchanger 13; and a downstream pipe 4c connecting the heat exchanger 13 and the carrier ship 100. At the time of receiving the liquefied hydrogen, the boil-off gas drawn from the gas phase portion 2a in the storage tank 2 is introduced through the upstream pipe 4a into the first heater 11 and the first compression device 12. The boil-off gas pressure-fed from the first compression device 12 is introduced into the heat exchanger 13 through the intermediate pipe 4b. The boil-off gas having passed through the heat exchanger 13 is introduced into the carrier ship 100 through the downstream pipe 4c.

The supply line 5 is a pipe connecting the upper part (roof part) of the storage tank 2 and the power plant 110 to each other. The supply line 5 is used for supplying the boil-off gas (hydrogen gas) to the power plant 110 at the time of hydrogen power generation in which power generation using hydrogen is performed in the power plant 110. That is, at the time of hydrogen power generation, the boil-off gas in the gas phase portion 2a in the storage tank 2 is supplied to the power plant 110 through the supply line 5. In the power plant 110, the supplied boil-off gas is used for combustion, and power generation is performed by the combustion energy. The supply line 5 corresponds to a "second transport line" in the present disclosure.

The supply line 5 is disposed so as to cross the heat exchanger 13 on the above-described return line 4. In a portion on the downstream side of the heat exchanger 13 on the supply line 5, there are disposed a second heater 21 and a second compression device 22 in this order from the upstream side. The second heater 21 corresponds to a "downstream heater" in the present disclosure, and the second compression device 22 corresponds to a "downstream compression device" in the present disclosure.

The second heater 21 heats the boil-off gas having passed through the heat exchanger 13. Similarly to the above-described first heater 11, the second heater 21 can be a heat exchanger that uses air or water at room temperature as a medium for heat exchange.

The second compression device 22 sucks the boil-off gas that has passed through the second heater 21 and has been heated, and pressure-feeds the boil-off gas to the downstream side. Similarly to the above-described first compression device 12, the second compression device 22 can include: a rotary element such as an impeller; and a drive source such as a motor that rotationally drives the rotary element. However, the second compression device 22 preferably has a pressure ratio higher than that of the first compression device 12.

The supply line 5 includes: an upstream pipe 5a connecting the storage tank 2 and the heat exchanger 13; an intermediate pipe 5b connecting the heat exchanger 13 and the second heater 21; and a downstream pipe 5c connecting the second compression device 22 and the power plant 110. At the time of hydrogen power generation, the boil-off gas drawn from the gas phase portion 2a in the storage tank 2 is introduced into the heat exchanger 13 through the upstream pipe 5a. The boil-off gas having passed through the heat exchanger 13 is introduced through the intermediate pipe 5b into the second heater 21 and the second compression device 22. The boil-off gas pressure-fed from the second compression device 22 is introduced into the power plant 110 through the downstream pipe 5c.

Here, there is a case where receiving of the liquefied hydrogen from the carrier ship 100 and the hydrogen power generation in the power plant 110 are simultaneously performed. In FIG. 1, the temperatures of the boil-off gas flowing through the portions of the return line 4 in such a situation are respectively denoted by a first temperature Ta1, a second temperature Ta2, and a third temperature Ta3. The first temperature Ta1 is the temperature of the boil-off gas introduced into the first heater 11 through the upstream pipe 4a of the return line 4, the second temperature Ta2 is the temperature of the boil-off gas introduced into the heat exchanger 13 through the intermediate pipe 4b of the return line 4, and the third temperature Ta3 is the temperature of the boil-off gas guided out from the heat exchanger 13 to the downstream pipe 4c of the return line 4. Similarly, in FIG. 1, the temperatures of the boil-off gas flowing through the portions of the supply line 5 in a situation in which receiving of the liquefied hydrogen and hydrogen power generation are simultaneously performed are respectively denoted by a fourth temperature Tb1, a fifth temperature Tb2, and a sixth temperature Tb3. The fourth temperature Tb1 is the temperature of the boil-off gas introduced into the heat exchanger 13 through the upstream pipe 5a of the supply line 5, the fifth temperature Tb2 is the temperature of the boil-off gas introduced into the second heater 21 through the intermediate pipe 5b of the supply line 5, and the sixth temperature Tb3 is the temperature of the boil-off gas guided out from the second compression device 22 to the downstream pipe 5c of the supply line 5.

First, a magnitude relationship between the first to third temperatures Ta1 to Ta3, which are the temperatures of the boil-off gas on the return line 4, will be described. The first temperature Ta1 is a temperature close to an internal temperature of the storage tank 2, in other words, a temperature close to a temperature range of liquefied hydrogen, and is assumed to be, for example, about -230°C. Since the second temperature Ta2 is a temperature of the gas after being heated by the first heater 11 and compressed by the first compression device 12, the second temperature Ta2 is a temperature higher than the first temperature Ta1 to some extent, specifically, a temperature exceeding the boiling point of nitrogen (about -200°C). As an example, the second temperature Ta2 can be a temperature exceeding -160°C. The third temperature Ta3 is a temperature of the gas after being subjected to heat exchange in the heat exchanger 13, that is, a temperature after being cooled by heat exchange with a gas that is an introduced gas from the upstream pipe 5a of the supply line 5 and that has substantially the same temperature as the first temperature Tal; therefore, the third temperature Ta3 is lower than the second temperature Ta2 and higher than the first temperature Ta1. Therefore, the relationship of Ta1 < Ta3 < Ta2 is established as the magnitude relationship between the temperatures on the return line 4.

Next, a magnitude relationship between the fourth to sixth temperatures Tb1 to Tb3, which are the temperatures of the boil-off gas on the supply line 5, will be described. The fourth temperature Tb1 is a temperature close to the internal temperature of the storage tank 2 and is assumed, similarly to the above-described first temperature Ta1, to be about -230°C, for example. The fifth temperature Tb2 is a temperature of the gas after being subjected to heat exchange in the heat exchanger 13, that is, a temperature of the gas after being heated by heat exchange with the gas introduced from the intermediate pipe 4b of the return line 4 and having the second temperature Ta2 (temperature exceeding the boiling point of nitrogen); therefore, the fifth temperature Tb2 is higher than the fourth temperature Tb1 and lower than the second temperature Ta2. The sixth temperature Tb3 is a temperature of the gas after being heated by the second heater 21 and being compressed by the second compression device 22, and the sixth temperature Tb3 is therefore higher than the fifth temperature Tb2. Therefore, the relationship of Tb1 < Tb2 < Tb3 is established as the magnitude relationship between the temperatures on the supply line.

As described above, in the present embodiment, the second temperature Ta2, which is the temperature of the gas after passing through the first heater 11 and the first compression device 12, is set to a value higher than the boiling point of nitrogen (for example, set to be higher than - 160°C). In other words, in the present embodiment, at the time of receiving the liquefied hydrogen, at which the boil-off gas flows through the return line 4, the first heater 11 heats the boil-off gas to a temperature equal to or higher than the boiling point of nitrogen, and the compression in the first compression device 12 raises the temperature of the boil-off gas after being heated.

The first branch line 6 is a pipe connecting the downstream pipe 4c of the return line 4 and the unloading line 3. Specifically, the first branch line 6 is disposed so as to connect, to each other, a downstream end part of the downstream pipe 4c close to a docking position of the carrier ship 100 and an upstream end part of the unloading line 3 close to the docking position of the carrier ship 100. The first branch line 6 corresponds to a "branch line" in the present disclosure.

The second branch line 7 is a pipe connecting the unloading line 3 and the supply line 5. Specifically, the second branch line 7 is disposed so as to connect a downstream end part of the unloading line 3 close to the storage tank 2, and a position on the upstream side of the second compression device 22 on the supply line 5. The connection destination, on the supply line 5, of the second branch line 7 only needs to be on the upstream side of the second compression device 22, and may be any one of a position between the storage tank 2 and the heat exchanger 13, a position between the heat exchanger 13 and the second heater 21, and a position between the second heater 21 and the second compression device 22.

The first branch line 6 and the second branch line 7 are used for the purpose of a cool-down process for cooling the unloading line 3 with a boil-off gas before the carrier ship 100 is docked in a harbor. In other words, the first branch line 6 and the second branch line 7 are not used when the liquefied hydrogen is received from the carrier ship 100. Therefore, in FIG. 1, both branch lines 6 and 7 are represented by broken lines.

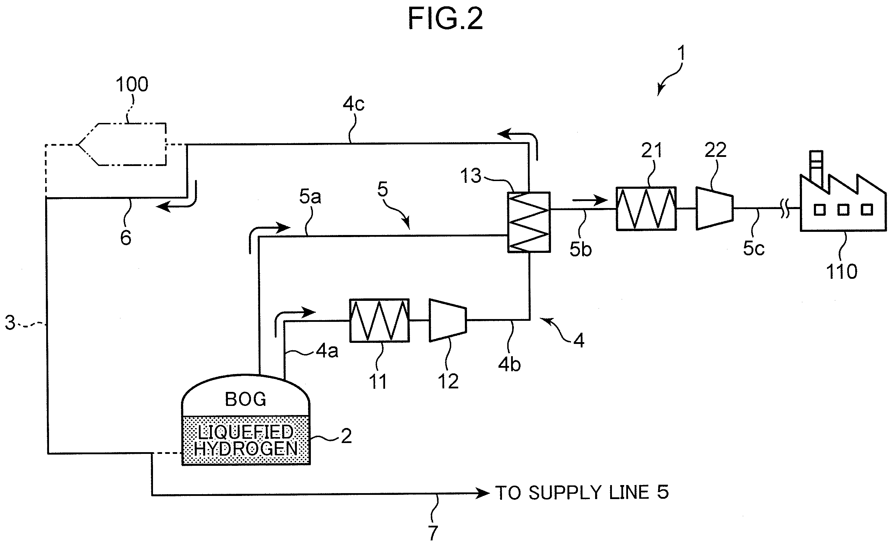

FIG. 2 is a diagram illustrating a flow of the boil-off gas when the above-described cool-down process is being performed. Since the cool-down process is a process performed before the carrier ship 100 is docked, the carrier ship 100 is represented by an imaginary line (two-dot chain line) in FIG. 2. As illustrated in the figure, at the time of cool-down process, the low-temperature boil-off gas drawn from the storage tank 2 is introduced into the unloading line 3 through the return line 4 and the first branch line 6, whereby the unloading line 3 is cooled.

In detail, the boil-off gas from the storage tank 2 sequentially flows, in order, through the upstream pipe 4a, the intermediate pipe 4b, and the downstream pipe 4c of the return line 4 while being heated and compressed by the first heater 11 and the first compression device 12 and being cooled by the heat exchanger 13, and the boil-off gas is further guided out from the downstream end part of the downstream pipe 4c to the first branch line 6. The boil-off gas guided out to the first branch line 6 is sent to the upstream end part of the unloading line 3 through the first branch line 6. In this manner, the boil-off gas from the storage tank 2 is introduced into the upstream end part of the unloading line 3 through the return line 4 and the first branch line 6, and is cooled by the heat exchanger 13 on the way.

Furthermore, the boil-off gas introduced into the upstream end part of the unloading line 3 flows to the downstream end part of the unloading line 3 and is then guided out to the second branch line 7. The boil-off gas guided out to the second branch line 7 is sent to a position on the upstream side of the second compression device 22 on the supply line 5 through the second branch line 7, and is supplied to the power plant 110 through the supply line 5. As described above, at the time of cool-down process, the boil-off gas from the storage tank 2 flows from the upstream end part to the downstream end part of the unloading line 3, whereby the unloading line 3 is cooled.

### [Action and Effect]

As described above, in the present embodiment, the first heater 11, the first compression device 12, and the heat exchanger 13 are disposed, in this order from the upstream side, on the return line 4 connecting the storage tank 2 and the carrier ship 100, and in addition, the low-temperature boil-off gas flowing through the upstream pipe 5a of the supply line 5 connecting the storage tank 2 and the power plant 110 is introduced into the heat exchanger 13 as a medium. With such a configuration, it is possible to effectively use the cold energy in the storage tank 2, and the energy efficiency can therefore be improved.

That is, in the present embodiment, the boil-off gas having passed through the first heater 11 and the first compression device 12 on the return line 4 is introduced into the heat exchanger 13 before reaching the carrier ship 100, and is cooled by heat exchange with the boil-off gas flowing through the supply line 5. Therefore, the boil-off gas (hydrogen gas) having a sufficiently low temperature and a high density can be supplied to the carrier ship 100 through the return line 4, and transport efficiency of the carrier ship 100 can therefore be improved. In addition, since the boil-off gas flowing toward the carrier ship 100 is cooled by the heat exchange using the low-temperature boil-off gas on the way from the storage tank 2 to the power plant 110, the cold energy in the storage tank 2 can be effectively used, and the energy efficiency can therefore be improved.

In the present embodiment, since the first heater 11 is provided on the upstream side of the first compression device 12 on the return line 4, the low-temperature boil-off gas from the storage tank 2 can be introduced into the first compression device 12 after being heated by the first heater 11. As a result, it is possible to prevent a required level of resistance to cold of the first compression device 12 from becoming excessive, and it is therefore possible to suppress an increase in price or the like due to high specifications of the first compression device 12.

In particular, in the present embodiment, since the boil-off gas is heated to the boiling point of nitrogen or higher by the first heater 11, it is possible to use, as the first compression device 12, a compression device having been conventionally used in an LNG facility or the like, and an increase in price of the first compression device 12 or the like can be effectively suppressed.

Furthermore, in the present embodiment, since the second heater 21 and the second compression device 22 are disposed, in this order from the upstream side, on the downstream side of the heat exchanger 13 on the supply line 5, the temperature of the boil-off gas introduced into the second compression device 22 can be raised by the second heater 21. Therefore, even in a situation where the flow on the return line 4 is stopped due to the absence of the carrier ship 100 or another reason, in other words, even in a situation where the heat exchange function by the heat exchanger 13 cannot be expected, it is possible to prevent an excessively low-temperature boil-off gas from being introduced into the second compression device 22. That is, since the low-temperature boil-off gas not heated by the heat exchanger 13 can be introduced into the second compression device 22 after being heated by the second heater 21, the excessively low-temperature boil-off gas is not introduced into the second compression device 22; therefore, it is possible to prevent a required level of resistance to cold of the second compression device 22 from becoming excessive.

Furthermore, in the present embodiment, since the first branch line 6 branching from the downstream pipe 4c of the return line 4 to the upstream end part of the unloading line 3 is provided, the boil-off gas from the storage tank 2 can be introduced into the unloading line 3 through the return line 4 and the first branch line 6 before the carrier ship 100 arrives (see FIG. 2). That is, in the present embodiment, it is possible to cool the unloading line 3 by previously causing the low-temperature boil-off gas generated by the evaporation of the liquefied hydrogen in the storage tank 2 to flow through the unloading line 3. As a result, it is possible to quickly shift to an unloading work when the carrier ship 100 arrives, and it is therefore possible to improve the efficiency of the unloading work. In addition, since the boil-off gas caused to flow through the unloading line 3 for pre-cooling (cool-down process) as described above is supplied to the power plant 110 through the second branch line 7, it is possible to use hydrogen without waste.

### [Variations]

Although a preferred embodiment of the present disclosure has been described above, the present disclosure is not limited thereto, and for example, the following variations are possible.

In the above embodiment, the boil-off gas (hydrogen gas) generated by evaporation of the liquefied hydrogen in the storage tank 2 is supplied to the power plant 110 as a consumer through the supply line 5 such that the hydrogen gas flows from the upstream end to the downstream end of the supply line 5. However, at least a part of the upstream side of the supply line 5 may be a pipe through which the liquefied hydrogen flows. In other words, the hydrogen introduced from the storage tank 2 into the heat exchanger 13 through the upstream pipe 5a of the supply line 5 only needs to be hydrogen having a temperature lower than that of the boil-off gas introduced into the heat exchanger 13 through the intermediate pipe 4b of the return line 4, and may be hydrogen gas or liquefied hydrogen. When liquefied hydrogen flows through the upstream pipe 5a of the supply line 5, a vaporizer that evaporates the liquefied hydrogen may be provided between the heat exchanger 13 and the second heater 21. Alternatively, the second heater 21 may have both a function of evaporating liquefied hydrogen and a function of heating hydrogen gas generated by the evaporation.

In the above embodiment, the first heater 11 is provided on the upstream side of the first compression device 12 on the return line 4, but the first heater 11 is not essential and may be omitted. In this case, the low-temperature boil-off gas drawn from the storage tank 2 is heated by compression by the first compression device 12. In this case, a width of heating, that is, the difference between the gas temperature immediately after leaving the storage tank 2 and the gas temperature immediately after leaving the first compression device 12 is smaller than that in the case where the first heater 11 is present. However, in view of a desire to supply, to the carrier ship 100, a boil-off gas having a temperature as low as possible, it is preferable to cool again the boil-off gas after heating. In view of this desire, when the heat exchanger 13 is provided on the downstream side of the first compression device 12, the boil-off gas can be cooled by heat exchange in the heat exchanger 13; therefore, the temperature of the gas suppled to the carrier ship 100 can be sufficiently lowered.

In the above embodiment, an example in which hydrogen is supplied from the storage tank 2 to the power plant 110 through the supply line 5 has been described, but the supply destination of hydrogen through the supply line 5 only needs to be any consumer who consumes hydrogen, and may be, for example, a hydrogen station that supplies hydrogen to a vehicle or the like using hydrogen as fuel.

In the above embodiment, an example in which the liquefied hydrogen received from the carrier ship 100 is stored in the storage tank 2 has been described, but the supply source of the liquefied hydrogen only needs to be any carrier that transports liquefied hydrogen, and may be, for example, a transport vehicle such as a tank truck.

### [Conclusion]

The above embodiment and the variations thereof include the following disclosure.

A liquefied hydrogen facility according to one aspect of the present disclosure includes: a storage tank that stores liquefied hydrogen; a first transport line that connects the storage tank and a predetermined carrier and is configured to guide out, to the carrier, a boil-off gas in a gas phase portion in the storage tank; a compression device provided on the first transport line and configured to suck the boil-off gas from the storage tank and send out the boil-off gas to the carrier; a heat exchanger provided on a downstream side of the compression device on the first transport line; and a second transport line that is disposed to extend from the storage tank to a predetermined consumer through the heat exchanger and guides, from the storage tank to the heat exchanger, hydrogen having a temperature lower than a temperature of a boil-off gas after being compressed by the compression device.

With the present disclosure, the boil-off gas having passed through the compression device on the first transport line is introduced into the heat exchanger before reaching the carrier and cooled by heat exchange with the hydrogen flowing through the second transport line. Therefore, the boil-off gas (hydrogen gas) having a sufficiently low temperature and a high density can be supplied to the carrier through the first transport line, and transport efficiency of the carrier can therefore be improved. In addition, since the boil-off gas flowing toward the carrier is cooled by heat exchange using the low hydrogen on the way from the storage tank to the consumer, cold energy in the storage tank can be effectively used, and the energy efficiency can therefore be improved.

Preferably, the liquefied hydrogen facility further includes a heater provided on an upstream side of the compression device on the first transport line.

With this aspect, the boil-off gas having a low temperature from the storage tank can be introduced into the compression device after being heated by the heater. As a result, it is possible to prevent a required level of resistance to cold of the compression device from becoming excessive, and it is therefore possible to suppress an increase in price or the like due to high specifications of the compression device.

Preferably, the heater has a function of heating the boil-off gas to a temperature equal to or higher than a boiling point of nitrogen.

With this aspect, it is possible to use, as the compression device, a compression device having been conventionally used in an LNG facility or the like, and an increase in price of the compression device or the like can be effectively suppressed.

The first transport line can be, for example, a line through which a boil-off gas returned from the storage tank to the carrier when the liquefied hydrogen is received from the carrier flows.

With this aspect, when the liquefied hydrogen is received from the carrier, a low-temperature and high-density boil-off gas cooled by the heat exchanger can be sent back to the carrier through the first transport line. As a result, it possible to efficiently transfer (receive) the liquefied hydrogen from the carrier to the storage tank.

Preferably, the liquefied hydrogen facility further includes: a downstream heater provided on a downstream side of the heat exchanger on the second transport line; and a downstream compression device provided on a downstream side of the downstream heater on the second transport line.

With this aspect, the downstream heater can raise a temperature of the hydrogen gas that is introduced into the downstream compression device through the second transport line. Therefore, even in a situation where a flow on the first transport line is stopped due to the absence of the carrier or another reason, in other words, even in a situation where the heat exchange function by the heat exchanger cannot be expected, it is possible to prevent an excessively low-temperature boil-off gas from being introduced into the downstream compression device, and it is therefore possible to suppress an increase in the price of the downstream compression device or the like.

Preferably, the liquefied hydrogen facility further includes: an unloading line through which liquefied hydrogen transferred from the carrier to the storage tank at a time of receiving the liquefied hydrogen flows; and a branch line that branches from a position on a downstream side of the heat exchanger on the first transport line and leads to the unloading line.

In this aspect, before the carrier arrives, the boil-off gas from the storage tank can be introduced into the unloading line through the first transport line and the branch line, and the introduced boil-off gas can cool the unloading line. As a result, it is possible to quickly shift to an unloading work when the carrier arrives, so that the efficiency of the unloading work can be improved.

### Reference Signs

- 1: liquefied hydrogen facility
- 2: storage tank
- 2a: gas phase portion
- 3: unloading line
- 4: return line (first transport line)
- 5: supply line (second transport line)
- 6: first branch line (branch line)
- 11: first heater (heater)
- 12: first compression device (compression device)
- 13: heat exchanger
- 21: second heater (downstream heater)
- 22: second compression device (downstream compression device)
- 100: carrier ship (carrier)
- 110: power plant (consumer)

## Claims

1. liquefied hydrogen facility comprising:
a storage tank that stores liquefied hydrogen;
a first transport line that connects the storage tank and a predetermined carrier and is configured to guide out, to the carrier, a boil-off gas in a gas phase portion in the storage tank;
a compression device provided on the first transport line and configured to suck the boil-off gas from the storage tank and send out the boil-off gas to the carrier;
a heat exchanger provided on a downstream side of the compression device on the first transport line; and
a second transport line that is disposed to extend from the storage tank to a predetermined consumer through the heat exchanger and guides, from the storage tank to the heat exchanger, hydrogen having a temperature lower than a temperature of a boil-off gas after being compressed by the compression device.

2. The liquefied hydrogen facility according to claim 1, further comprising a heater provided on an upstream side of the compression device on the first transport line.

3. The liquefied hydrogen facility according to claim 2, wherein the heater has a function of heating the boil-off gas to a temperature equal to or higher than a boiling point of nitrogen.

4. The liquefied hydrogen facility according to claim 1 or 2, wherein the first transport line is a line through which a boil-off gas returned from the storage tank to the carrier when the liquefied hydrogen is received from the carrier flows.

5. The liquefied hydrogen facility according to claim 4, further comprising:
a downstream heater provided on a downstream side of the heat exchanger on the second transport line; and
a downstream compression device provided on a downstream side of the downstream heater on the second transport line.

6. The liquefied hydrogen facility according to claim 4, further comprising:
an unloading line through which liquefied hydrogen transferred from the carrier to the storage tank at a time of receiving the liquefied hydrogen flows; and
a branch line that branches from a position on a downstream side of the heat exchanger on the first transport line and leads to the unloading line.
